Europäisches Patentamt

European Patent Office

Office européen des brevets

(11) Publication number: **0 250 385**
A1

# (12) EUROPEAN PATENT APPLICATION

(21) Application number: **87850200.4**

(22) Date of filing: **18.06.87**

(51) Int. Cl.⁴: **A 47 J 37/06**
A 47 J 37/04, A 23 B 4/04

(30) Priority: **19.06.86 SE 8602730**

(43) Date of publication of application:
**23.12.87 Bulletin 87/52**

(84) Designated Contracting States:
**AT BE CH DE ES FR GB IT LI NL SE**

(71) Applicant: **COLENOVA AB**
**Box 4179**
**S-203 13 Malmö (SE)**

**NORDFALKS AB**
**Box 63**
**S-431 21 Mölndal (SE)**

(72) Inventor: **Hagman, Stig Ulf Conny**
**V. Rönneholmsvägen 33**
**S-217 41 Malmö (SE)**

**Lundqvist, Leif Göran**
**Strandvägen 18 B**
**S-237 00 Bjärred (SE)**

(74) Representative: **Lenz, Franz et al**
**AWAPATENT AB Box 5117**
**S-200 71 Malmö (SE)**

(54) Apparatus for flavoring oven-grilled food.

㊼ Food which is being barbecued or grilled in an oven is flavored by placing a perforated bag (23) of aluminium foil containing a dry substance, such as hickory chips, and flavoring agents, in a basket-shaped receiving portion in a receiving device (15) loosely placed within the oven space (12), and is heated to emit smoke by means of a heating element which is connected to a control unit (17) on the outer side of the oven by means of a cable (16) extending through the oven door opening. After the contents of the bag (23) have been used up, the entire bag (23) with the remaining dry substance is removed, and a new bag (23) is inserted.

EP 0 250 385 A1

# Description

## APPARATUS FOR FLAVORING OVEN-GRILLED FOOD

The present invention relates to an apparatus for flavoring food which has been grilled in an oven, said apparatus comprising, within the oven space, a receiving device equipped with an electrical heating element and adapted to receive a substance which, when heated, emits a food-flavoring smoke, and a control unit on the outer side of the oven for operating and time-setting of said heating element.

In recent years, it has become increasingly popular, especially in the USA, to flavor barbecued or oven-grilled food by heating a flavoring agent to emit smoke within the oven during grilling. The agent in question maybe liquid or solid, and the flavor can be varied in different ways. The ovens used for this purpose are expensive, especially designed ovens with a built-in device adapted to receive the flavoring agent. Many restaurants would like to supplement their kitchen equipment with an oven of this type, but are unable to do so because of the cost involved; scrapping a fully serviceable grill oven and replacing it by one provided with a flavoring apparatus, or converting an existing oven, is far too expensive.

The present invention aims at providing a simple and inexpensive apparatus that may be used with practically all ovens for flavoring food therein, and there is no need for altering or converting the oven in any respect. This aim is achieved in that the above-mentioned receiving device is adapted to be loosely placed in the oven space and has a receiving portion in which a perforated package of incombustible material, for example aluminium foil, containing the smoke-emitting substance in dry form, is adapted to be readily removably placed in direct or indirect contact with said heating element, and that said control unit is connected with said receiving device by means of a cable extending from the outer side of the oven to the oven space via the oven door opening, or a separate opening.

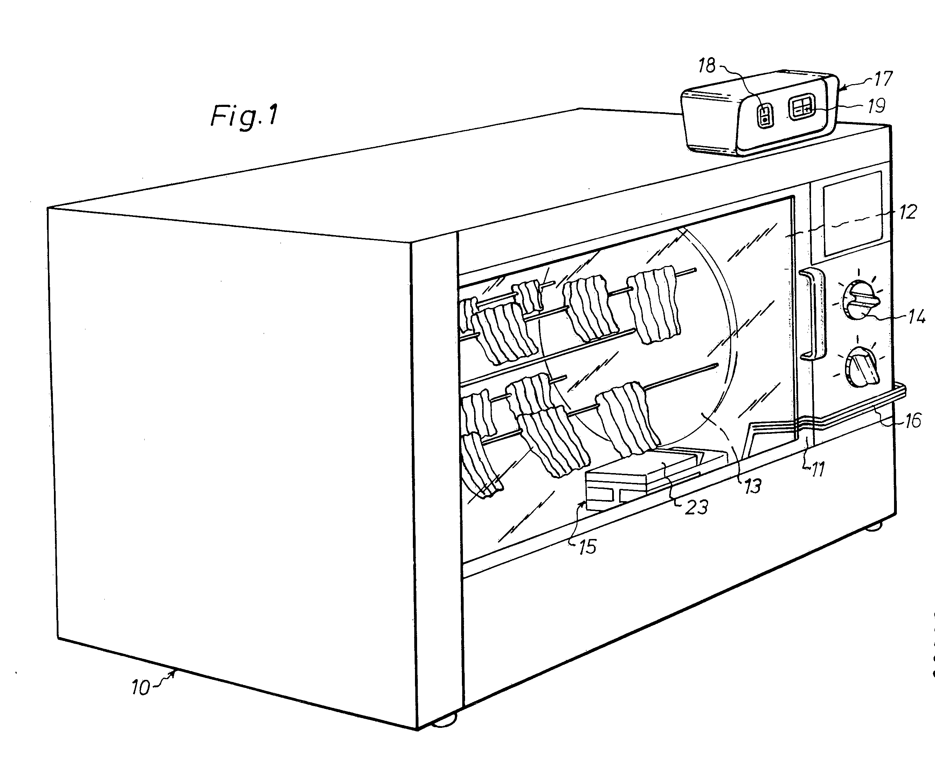

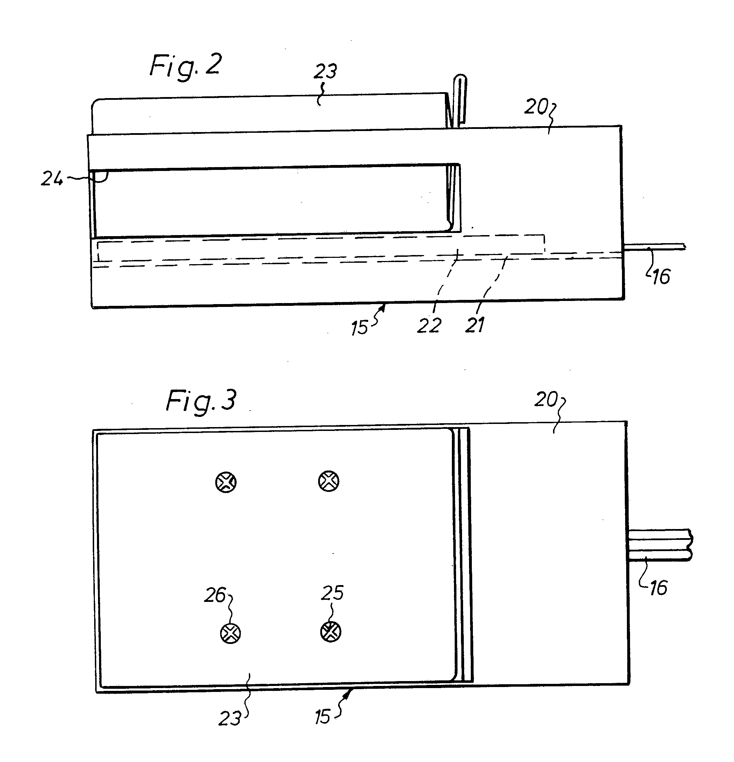

The invention will be described in more detail below, reference being had to the accompanying drawings illustrating an example. Fig. 1 is a perspective view of a conventional oven provided with the apparatus according to the invention. Fig. 2 is a vertical projection of a receiving device comprised by the apparatus according to the invention. Fig. 3 shows the receiving device according to Fig. 2 as seen from above.

Fig. 1 illustrates a conventional grill oven of the type used in shops, restaurants, bars etc. The oven has a casing with a door 11 closing an oven space 12 in which a rotating member for receiving the food to be grilled is provided. The oven has electrical elements (not shown) and is provided on its front side with knobs 14 for setting the grilling temperature and grilling time.

If one wishes to change the flavor of the food that is being grilled, there is provided, in accordance with the invention, a receiving device 15 in the oven space 12, said device 15 comprising an upwardly open sheet-metal box 20 having a bottom 21 which is provided with through apertures and carries a heating element in the form of a coil or plate 22. That part of the box 20 which is above the bottom 21 also is provided with through apertures 24 to form a basket-shaped portion of the device. The basket-shaped portion is so dimensioned that a package 23 of predetermined size can be pressed thereinto with a certain friction, as illustrated in Fig. 2. A cable 16 is connected to the electrical element 22. The cable 16 is pliant and resilient and, preferably, is of the flat type to enable it to be drawn out toward the outer side of the oven via the oven door, as illustrated in Fig. 1. On the outer side, the cable section is connected to a control unit 17 which may be placed on the upper side of the oven 10 or in some other position. The control unit 17 is connected to the electric mains and has switches 18 for operating the electrical element of the device 15. The control unit 17 further is provided with means for setting the time during which the heating element 22 is to be switched on, and an indicating means 19 showing the set time and/or the time remaining before the element 22 is switched off. The heating element 22 preferably is reversible in respect of the power, such that the element can operate at full power during an initial stage and then at, for example, half power. The power may be set by means of a conventional circuit in the control unit 17. The heating element 22 is operated by the mains voltage.

An important aspect of the invention is the handling of the material which, upon heating, is to produce the flavoring smoke. To this end, a dry substance 25 is used which is placed in a package in the form of a bag of aluminium foil which is provided in at least one side with through apertures 24, although it may also be perforated on all sides. The dry substance within the package 23 normally is in the form of wooden pellets, of, for example, hickory which is comminuted and compressed together with flavoring substances. Other materials, such as thoroughly tested mixtures of wood, may of course be placed within the package 23 to emit the desired smoke upon heating. The package 23 is made in a size such that, as has been mentioned above, it fits with a certain friction into the basket-shaped portion of the receiving device 15 and, within this portion, abuts against a supporting plate which is provided with through apertures and on the underside of which the heating element 22 is placed. The package 23 may also directly engage the heating element. The package 23 preferably is in the form of a bag of aluminium foil because this material is cheap and readily available, but other incombustible materials are also conceivable.

When it is desired to flavor food which is being grilled in the oven 10, a package 23 is pressed down into the basket-shaped portion of the receiving device 15, whereupon the oven door 11 is opened and the receiving device 15 is placed on the bottom of the oven space. Then the cable 16 is drawn out through the oven door opening, and the oven door 11 can then be closed again since the cable construction makes this possible. The control unit 17 is mounted, for example, on top of the oven and is activated by means of the switch I8 after the time has been set during which the heating element 22 is to be switched on. The power preferably is reduced automatically or manually after a predetermined period of time, such that the heating element gives off so much heat that the production of smoke is sustained.

The flavoring of food by the supply of smoke during grilling gives a new and different taste to meat, fish etc., and the present invention now provides every shop or restaurant not wanting to invest money in an expensive special oven with an opportunity to offer its customers food having this new flavor.

## Claims

1. Apparatus for flavoring food which has been grilled in an oven (10), said apparatus comprising, within the oven space (12), a receiving device (15) equipped with an electrical heating element (22) and adapted to receive a substance which, when heated, emits a food-flavoring smoke, and a control unit (17) on the outer side of the oven for operating and time-setting of the heating element (22), **characterised** in that said receiving device (15) is adapted to be loosely placed in the oven space (12) and has a receiving portion in which a perforated package (23) of incombustible material, for example aluminium foil, containing the smoke-emitting substance (25) in dry form, is adapted to be readily removably placed in direct or indirect contact with said heating element (22), and that said control unit (17) is connected with said receiving device (15) by means of a cable (16) extending from the outer side of the oven (10) to the oven space (12) via the oven door opening.

2. Apparatus as claimed in claim 1, **characterised** in that the receiving portion (21) of said receiving device (15) is in the form of a basket having a bottom with through apertures and a heating plate (22) into which the bag-shaped package (23) is readily pressed down and removable as a unit.

3. An apparatus as claimed in claim 1 or 2, **characterised** in that the dry substance (25) consists of pellets containing comminuted wood, such as hickory, and various flavoring agents.

4. An apparatus as claimed in claim 1, 2 or 3, **characterised** in that the cable 16 between said receiving device (15) and said control (17) is a flat cable that can be pinched between the oven door (11) and the door frame or the like.

5. An apparatus as claimed in any one of the preceding claims, **characterised** in that said control unit (17) is adapted to activate said heating element to develop its full power or, alternatively, part of its power during predetermined periods of time.

0250385

Fig.1

0250385

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 232 597 (PERRINE) <br> * Whole document * | 1,2,3 | A 47 J 37/06 <br> A 47 J 37/04 <br> A 23 B 4/04 |
| | --- | | |
| X | US-A-4 374 489 (ROBBINS) <br> * Whole document * | 1,3 | |
| | --- | | |
| X | DE-C- 880 994 (PETER) <br> * Whole document * | 1 | |
| | --- | | |
| A | US-A-2 262 910 (ALLER) <br> * Whole document * | 1,3 | |
| | --- | | |
| A | US-A-2 967 023 (HUCKABEE) <br> * Figures 6,7; column 4, lines 14-37 * | 1 | |
| | | | TECHNICAL FIELDS SEARCHED (Int. Cl.4) |
| | --- | | |
| A | US-A-3 942 425 (CANRIGHT) <br> * Column 2, lines 44-50 * | 5 | A 47 J <br> A 23 B |
| | --- | | |
| A | US-A-3 665 840 (HORANY) <br> * Figures 1,3; column 2, lines 49-54 * | 1 | |
| | --- | | |
| A | US-A-2 722 882 (WILSON) <br> * Whole document * | 1 | |
| | --- | | |
| A | US-A-3 901 136 (WILSON) <br> * Whole document * | 1 | |
| | --- -/- | | |

The present search report has been drawn up for all claims

| Place of search | Date of completion of the search | Examiner |
|---|---|---|
| THE HAGUE | 25-09-1987 | SCHARTZ J. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | GB-A-2 102 275 (BELL)<br>* Figures 4,5 * | 1 | |

-----

TECHNICAL FIELDS SEARCHED (Int. Cl.4)

The present search report has been drawn up for all claims

| Place of search | Date of completion of the search | Examiner |
|---|---|---|
| THE HAGUE | 25-09-1987 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82